# EUROPÄISCHE PATENTSCHRIFT

(11) **EP 0 724 791 B1**
(45) Veröffentlichungstag und Bekanntmachung des Hinweises auf die Patenterteilung: **03.12.1997**
(21) Anmeldenummer: 93905070.4
(22) Anmeldetag: 05.03.1993
(51) Int. Cl.: H02M 3/335

(54) **Wandlerschaltung**
Converter circuit
Circuit convertisseur

(43) Veröffentlichungstag der Anmeldung: 07.08.1996
(73) Patentinhaber: Fleck, Carl Maria, Dr., 2391 Kaltenleutgeben (AT)
(72) Erfinder: BRÜNNER, Alfred, A-1030 Wien (AT)
(74) Vertreter: Kliment, Peter, Dipl.-Ing.
(86) Internationale Anmeldenummer: AT9300038
(87) Internationale Veröffentlichungsnummer: WO9421029

(56) Entgegenhaltungen:
- EP-A- 0 519 882
- PATENT ABSTRACTS OF JAPAN vol. 13, no. 390 (E-813) 29 August 1989 & JP-A-01 136 567 (DENSETSU) 29 Mai 1989
- PATENT ABSTRACTS OF JAPAN vol. 13, no. 192 (E-753) 9 Mai 1989 & JP-A-01 012 865 (FUJITSU) 17 Januar 1989
- PESC '92 RECORD 29 June 1992, TOLEDO, SPAIN Seiten 101 - 108 PEREZ 'The forward discharge converter (FDC): a general solution to obtain soft-switching in any power converter'

## Beschreibung

Die Erfindung bezieht sich auf eine Wandlerschaltung zur Umwandlung einer Gleichspannung in eine Wechselspannung mit einem magnetisierbaren Kern, der von Wicklungen umgeben ist, und zwar einer mit einem Pol einer Gleichspannungsquelle verbundenen Arbeitswicklung, deren zweites Ende über einen gesteuerten Schalter mit dem zweiten Pol der Gleichspannungsquelle verbunden ist, einer Entmagnetisierwicklung, deren einer Anschluß mit einem Pol der Gleichspannungsquelle und deren anderer Anschluß über eine Diode mit dem zweiten Pol der Gleichspannungsquelle verbunden ist, einer mit einer Last verbundenen Lastwicklung sowie einer Zusatzwicklung, die über einen in Phase mit dem gesteuerten Schalter der Arbeitswicklung ansteuerbaren weiteren gesteuerten Schalter schaltbar ist.

Solche Wandler werden meist als Eintaktwandler bezeichnet und wurden z.B. durch die DD-PS 210 796 bekannt. Bei dieser bekannten Lösung dient die Zusatzwicklung lediglich zur Versorgung einer Treiberschaltung zur Ansteuerung des die Arbeitswicklung steuernden Schalters.

Der Nachteil der bekannten Lösung liegt darin, daß diese nur für den Betrieb induktiver Lasten geeignet ist, nicht aber für ohm'sche oder kapazitive Lasten. Der Grund dafür liegt in dem Umstand, daß es beim Durchschalten der Arbeitswicklung bei einer kapazitiven Last zu einem extrem raschen Anstieg des Stromes in der Arbeitswicklung kommt und damit in weiterer Folge zu einer entsprechend hohen Induktionsspannung, die zu einer Zerstörung der Schalter führt.

Weiters wurden auch schon Sperr- oder Flußwandler, die mit einem Kern, der von einer mit einem Pol einer Spannungsquelle verbundenen Arbeitswicklung, deren zweites Ende über einen gesteuerten Schalter, zu dem über eine Diode ein Kondensator parallel geschaltet ist, mit dem zweiten Pol der Spannungsquelle verbunden ist, einer Entmagnetisierwicklung, deren einer Anschluß mit einem Pol der Spannungsquelle und deren anderer Anschluß über eine Diode mit dem zweiten Pol der Spannungsquelle verbunden ist, und eine mit einer Last verbundene Sekundärwicklung umgeben ist, vorgeschlagen (vgl. JP-A-113 6567).

Solche bekannte Wandler können, insbesondere wenn als gesteuerte Schalter Feldeffekttransistoren verwendet werden, nur mit kleinen Lasten betrieben werden, da sich für größere Kerne, wie sie für die Übertragung höherer Leistungen erforderlich sind, höhere Induktivitäten ergeben, die im Betrieb zu hohen Spannungsspitzen an den gesteuerten Schaltern führen, die deren Zerstörung bedingen können.

Zur Dämpfung dieser Spannungsspitzen wurden daher Widerstände parallel zum Kondensator geschaltet, wodurch sich jedoch bei größeren Leistungen ein entsprechender Verlust ergibt.

Ziel der Erfindung ist es, diese Nachteile zu vermeiden und einen Wandler der eingangs erwähnten Art vorzuschlagen, bei dem nur geringe Verluste auftreten und bei dem Spannungsspitzen weitgehend vermieden sind.

Erfindungsgemäß wird dies bei einem Wandler der eingangs erwähnten Art dadurch erreicht, daß zum die Arbeitswicklung steuernden Schalter eine aus einer Diode und einem Kondensator bestehende Serienschaltung parallel geschaltet ist und daß die Zusatzwicklung an dem Verbindungspunkt der beiden Bauteile dieser Serienschaltung angeschlossen ist, wobei der Kondensator mit dem zweiten Pol der Spannungsquelle verbunden ist, mit dem der zweite Anschluß der Zusatzwicklung über den in Phase mit dem die Arbeitswicklung steuernden Schalter steuerbaren zweiten Schalter verbindbar ist.

Auf diese Weise ist sichergestellt, daß die im Kondensator gespeicherte Energie beim Durchschalten dem magnetischen Kreis über die Zusatzwicklung wieder zugeführt und damit in den Lastkreis übertragen werden kann. Dadurch wird gleichzeitig der Wirkungsgrad des Wandlers erhöht und die auftretenden Verluste reduziert, wodurch auch eine übermäßige Erwärmung der gesamten Schaltung vermieden wird.

Aufgrund der geringeren Last, die der weitere, die Zusatzwicklung steuernde Schalter zu steuern hat, schaltet dieser früher durch als der die Arbeitswicklung steuernde Schalter, soda$ zuerst die im Kondensator gespeicherte Energie in den Lastkreis übertragen wird und dann erst die der Spannungsquelle über die Arbeitswicklung entnommene Energie. Auch ist es durch die vorgeschlagenen Maßnahmen möglich, den erfindungsgemäßen Wandler mit kapazitiver Last zu betreiben, da eben die Rückwirkung der kapazitiven Last durch die Zusatzwicklung entsprechend gedämpft wird, sodaß auch empfindliche Schalter, wie Feldeffekttransistoren verwendet werden können.

Um sehr hohe Leistungen übertragen zu können, kann nach einem weiteren Merkmal der Erfindung vorgesehen sein, daß der Kern des Wandlers einen Luftspalt aufweist.

Dadurch ergibt sich zwar der Nachteil einer niedrigeren Induktivität des Wandlers, doch werden die daraus resultierenden Spannungsspitzen durch die vorgeschlagene Zusatzwicklung abgebaut und deren Energie in den Lastkreis übertragen.

Nach einem weiteren Merkmal der Erfindung wird ein Wandler zum Umwandeln von Gleichspannung in eine Gleichspannung mit unterschiedlicher Spannung mit einer erfindungsgemäßen Wandlerschaltung vorgeschlagen, an dem eine Gleichrichterschaltung mit mehreren Gleichrichtern angeschlossen ist.

Dabei ist erfindungsgemäß vorgesehen, daß die Gleichrichterschaltung durch eine Kaskadenschaltung gebildet ist, bei der jeder der beiden Anschlüsse der Lastwicklung mit einer Reihenschaltung von Kondensatoren verbunden ist und eine Reihenschaltung von Gleichrichtern vorgesehen ist, deren Verbindungspunkte mit den Verbindungspunkten der Kondensatoren verbunden sind, wobei je zwei Gleichrichter einen Kondensator überbrücken.

Auf diese Weise können sehr hohe Gleichspannungen gewonnen werden, wobei sich die Einrichtung durch einen sehr einfachen Aufbau auszeichnet. Durch die erfindungsgemäß vorgesehene Schaltung des Wandlers, insbesondere der Zusatzwicklung, ist sichergestellt, daß die durch die lastseitige kapazitive Belastung bedingten Spitzen in den Kern einspeichert werden und sich daher keinerlei Probleme im Hinblick auf die Spannungsbelastung der Schalter ergeben.

Durch die DE-OS 36 44 012 wurde zwar schon ein Gleichspannungswandler vorgeschlagen, der einen Wechselrichter und einen diesem nachgeschalteten Gleichspannungswandler umfaßt. Bei dieser bekannten Lösung ist jedoch der Gleichspannungswandler als einfache Vollweg-Gleichrichterschaltung mit einem Siebkondensator ausgebildet, weshalb die Ausgangsspannung im wesentlichen durch die Windungszahlen der einzelnen Spulen festgelegt ist.

Ein weiteres Ziel der Erfindung ist es, einen erfindungsgemäßen Wandler vorzuschlagen, der sich durch eine hohe Stabilität auch bei größeren Lastschwankungen auszeichnet und bei dem die Arbeitsfrequenz unter allen Belastungszuständen deutlich außerhalb des hörbaren Bereichs gehalten werden kann.

Erfindungsgemäß wird dies dadurch erreicht, daß an dessen Ausgang den Strom und bzw. oder die Spannung erfassende Fühler angeordnet sind, die mit Eingängen von Komparatoren verbunden sind, deren zweite Eingänge mit Sollwertgebern verbunden sind, und die ausgangsseitig mit einem spannungsgesteuerten Oszillator verbunden sind, der einen Eingangskreis aufweist, der einen mit den Ausgängen der Komparatoren in Verbindung stehenden variablen Widerstand aufweist, wobei der spannungsgesteuerte Oszillator ausgangsseitig mit einem steuerbaren Monoflop in Reihe geschaltet ist, dessen Ausgang mit einer den Schaltern zugeordneten Steuereinheit verbunden ist und dessen zeitbestimmendes Glied in Abhängigkeit von der Frequenz des spannungsgesteuerten Oszillators gesteuert ist.

Durch diese Maßnahmen ist sichergestellt, daß der Wandler mit Impulszügen variabler Frequenz und variablem Tastverhältnis. betrieben werden kann. Dadurch kann der Wandler bei einer geringen Belastung mit Impulszügen niedriger Frequenz und kleinem Tastverhältnis und bei hoher Belastung mit Impulszügen mit hoher Frequenz und einem hohen Tastverhältnis angesteuert werden. Dadurch kann auch bei großen Belastungsschwankungen die Ausgangsspannungen in sehr engen Grenzen konstant gehalten werden. Außerdem ist es durch die vorgeschlagenen Maßnahmen auch möglich die Ausgangsspannung in weiten Grenzen einzustellen und praktisch unabhängig von der Belastung konstant zu halten.

Da bei geringer Belastung das Tastverhältnis verringert werden kann, ist es möglich ein zu weites Absinken der Arbeitsfrequenz des Wandlers zu vermeiden, sodaß auch im Leerlauf eine ausreichend hohe Frequenz erhalten bleiben kann, um die Abgabe von im Hörbereich liegenden Geräuschen zu vermeiden.

Nach einem weiteren Merkmal der Erfindung kann vorgesehen sein, daß das zeitbestimmende Glied des Monoflops einen steuerbaren Widerstand aufweist, der von einem Tiefpaß gesteuert ist.

Auf diese Weise kann die Laufzeit des Monoflops sehr einfach verändert werden.

Weiters kann vorgesehen sein, daß zwischen dem spannungsgesteuerten Oszillator und dem Monoflop eine Impulsformerschaltung zur Erzeugung von Nadelimpulsen zwischengeschaltet ist.

Durch diese Maßnahmen ergibt sich eine eindeutige Ansteuerung des Monflops durch den spannungsgesteuerten Oszillator.

Nach einem weiteren Merkmal der Erfindung kann vorgesehen sein, daß eine Sperrschaltung vorgesehen ist, die während der Ablaufzeit des Monoflops zu diesem gelangende Impulse verhindert.

Auf diese Weise wird sicher verhindert, daß das Monoflop unmittelbar mit dem Ende seiner Ablaufzeit, bzw. während seines Zurückkippens wieder getriggert werden kann, wodurch sichergestellt ist, daß das Monoflop ohne in den Grundzustand zurückgekippt zu sein nicht für zwei Ablaufzeiten im getriggerten Zustand gehalten werden kann.

Nach einem weiteren Merkmal der Erfindung kann vorgesehen sein, daß der spannungsgesteuerte Oszillator mit Schmitt-Triggern aufgebaut ist und die Sperrschaltung durch eine Sperrdiode gebildet ist, die mit dem Ausgang eines mit einem Zeitglied beschalteten Schmitt-Triggers des spannungsgesteuerten Oszillators in Verbindung steht und an dem Zeitglied des Monoflops angeschlossen ist.

Auf diese Weise ergibt sich eine sehr einfacher Aufbau der Sperrschaltung.

Weiters kann vorgesehen sein, daß die Eingangsstufe des spannungsgesteuerten Oszillators mit dem Ausgang eines Unterspannungs-Abschaltungskreises mit Sanftanlauf verbunden ist.

Durch diese Maßnahmen ergibt sich der Vorteil, daß die Gleichspannungsquelle nach einer Abschaltung oder nach einem zu tiefen Einbruch der ungeregelten Versorgungsspannung mit geringer Ausgangsspannung startet und sich diese allmählich auf den eingestellten Wert erhöht. Dies ist insbesondere für die Versorgung von Lampen von Bedeutung, die durch einen Einschalt-Stromstoß, der sich aufgrund der Temperaturabhängigkeit der Wendel der Lampen ergibt, sehr hoch belastet sind, was sich auf deren Lebensdauer nachteilig auswirkt. Durch eine allmähliche Steigerung der Versorgungsspannung werden Stromstöße, welche die Glühwendeln auch aufgrund des vom Strom erzeugten Magnetfeldes mechanisch beanspruchen, vermieden und dadurch eine längere Lebenszeit der Glühlampen erreicht.

Ein bevorzugtes Anwendungsgebiet der erfindungsgemäßen Wandlerschaltung ist die Spannungsversorgung von elektrisch geladenen Filtern, wie z.B. den bekannten Rußfiltern für Abgase, insbesondere für Abgase von Diesel-Brennkraftmaschinen, welches Filter zwei im wesentlichen parallel zum Abgasstrom ausgerichtete, an die Ausleitungen der Kaskadenschaltung angeschlossene Elektroden, zur Erzeugung eines elektrischen Feldes und zwischen diesen angeordnete Abscheideflächen für den Ruß aufweist, die an elektrisch isolierenden Teilen angeordnet sind.

Die Erfindung schlägt daher weiters die Verwendung eines erfindungsgemäßen Wandlers zur Versorgung eines solchen Rußfilters für Abgase, insbesondere für Abgase von Diesel-Brennkraftmaschinen, vor.

Dabei kann der erfindungsgemäßen Wandlerschaltung zur Erzielung der erforderlichen hohen Spannungen eine aus Kondensatoren und Dioden gebildete Kaskadenschaltung nachgeschaltet sein. Eine solche Kombination ist bei den erfindungsgemäßen Wandlern aufgrund der Schaltung der Zusatzwicklung möglich, durch die eine Einspeisung der in den lastseitig angeordneten Kondensatoren gespeicherten Energie in den Kern sichergestellt ist und dadurch die Schalter des Wandlers vor einer Beschädigung geschützt sind.
Die Erfindung wird nun anhand der Zeichnung näher erläutert. Dabei zeigt:
- Fig. 1: eine Hochspannungsschaltung mit einem erfindungsgemäßen Wandler,
- Fig. 2: schematisch ein Rußfilter
- Fig. 3: eine Regeleinheit in größerem Detail und
- Fig. 4 bis 6: Diagramme der Signale an verschiedenen Punkten der Schaltung der Regeleinheit bei verschiedenen Belastungszuständen.

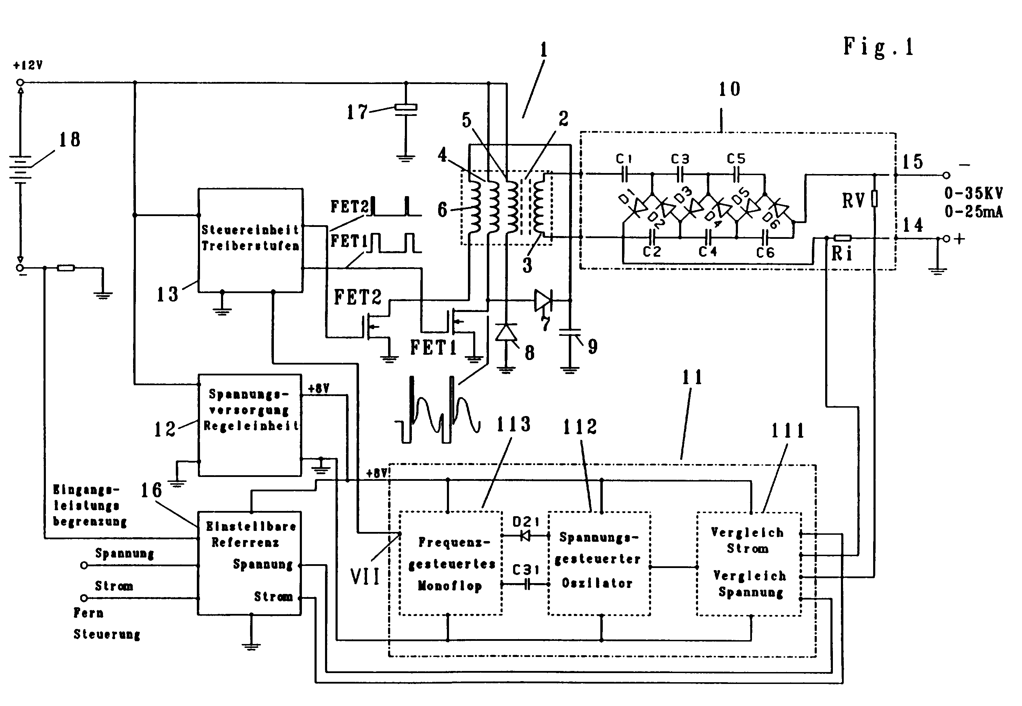

Der Wandler 1 ist nach der Fig. 1 an eine Gleichspannungsversorgung 18 angeschlossen und wird über eine Steuereinheit 13 gesteuert. Ausgangsseitig ist eine Kaskadenschaltung 10 an den Wandler 1 angeschlossen. Weiters ist zur Glättung der Belastungsspitzen der Gleichspannungsquelle ein Siebkondensator 17 parallel zur Gleichspannungsquelle geschaltet.

Der Wandler 1 weist einen magnetisierbaren Kern 2 auf, der in nicht dargestellter Weise mit einem Luftspalt versehen ist. Auf dem Kern 2 ist neben der Lastwicklung 3 und der mit der Gleichspannungsversorgung verbundenen Arbeitswicklung 4 noch eine Entmagnetisierwicklung 5 und eine Zusatzwicklung 6 angeordnet.

Die Arbeitswicklung 4 ist über einen gesteuerten Schalter FET1 an die Gleichspannungsversorgung 18 anschaltbar, wogegen die Entmagnetisierwicklung 5 über eine Diode 8 ständig mit der Gleichspannungsversorgung 18 verbunden ist.

Über die Diode 7 ist ein Kondensator 9 parallel zum Schalter FET1, der als Feldeffekttransistor ausgebildet ist, geschaltet.

An die Verbindung der Diode 7 mit dem Kondensator 9 ist die Zusatzwicklung 6 angeschlossen, die über einen zweiten gesteuerten Schalter FET2, der ebenfalls als Feldeffekttransistor ausgebildet ist, parallel zum Kondensator 9 schaltbar ist und bei durchgeschaltetem Schalter FET2 eine Entladung des Kondensators 9 ermöglicht.

Die Ansteuerung der beiden Schalter FET1, FET2 erfolgt mit zueinander gleichphasigen Impulsen, wobei die Ansteuerung der beiden Schalter FET1, FET2 im Sinne eines Durchschaltens der Hauptstrompfade dieser Schalter gleichzeitig beginnt, aber die Dauer der Durchschaltung des Schalters FET2 kürzer als jene des Schalters FET1, vorzugsweise etwa halb so lang ist. Aufgrund des Umstandes, daß die vom Schalter FET2 zu schaltende Last geringer als die vom Schalter FET1 zu schaltende Last ist, schaltet der Schalter FET2 früher durch und der Kondensator 9 kann sich über die Zusatzwicklung 6 und den Schalter FET2 entladen. Dabei erfolgt mit nur geringer Zeitverzögerung eine Durchflutung der Arbeitswicklung 4 und damit eine Magnetisierung des Kernes 2, die zu einer Induzierung einer Spannung in der Lastwicklung 3 führt.

Nach dem Sperren des Schalters FET1 und FET2, wobei der Schalter FET2, wie bereits erwähnt früher abschaltet als der Schalter FET1, bricht das Magnetfeld zusammen, wobei die entstehenden Spannungsspitzen über die Entmagnetisierungswicklung 5 und die mit dieser in Serie geschalteten Diode 8 abgebaut und z.T. über die Diode 7 in den Kondensator 9 gespeichert werden.

Beim abermaligen Durchschalten der Schalter FET1, FET2 wird der Kondensator 9 über die Zusatzwicklung 6 entladen, wobei die gespeicherte Energie den Kern wieder magnetisiert, sodaß diese ebenso, wie die der Gleichspannungsversorgung 18 über die Arbeitswicklung 4 entnommene Energie auf die Lastwicklung 3 übertragen wird.

An der Lastwicklung 3 des Wandlers ist eine aus Kondensatoren C1 bis C6 und Dioden D1 bis D6 aufgebaute Kaskadenschaltung 10 angeschlossen, an deren Ausgang eine Hochspannung abnehmbar ist. Der Laststrom der Kaskade 10 wird über den Widerstand Rᵢ und die Ausgangsspannung der Kaskade 10 über den Widerstand Rᵥ erfaßt und einer Regeleinheit 11 zugeführt, die über eine Spannungsversorgung 12 mit Gleichspannung versorgt ist und die ihrerseits ein Steuersignal für die Steuereinheit 13 liefert, die die beiden Schalter FET1 und FET2 steuert.

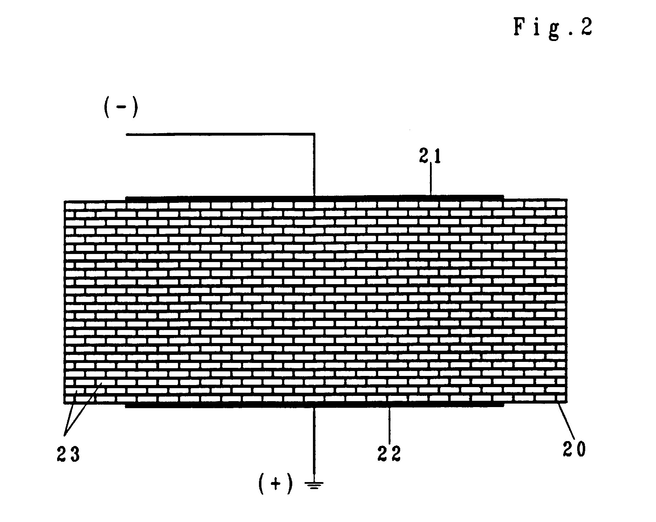

Die Regeleinheit 11 liefert ein Steuersignal in Abhängigkeit von der Ausgangsspannung und dem Ausgangsstrom der Kaskade 10, an der die Elektroden eines elektrostatischen Filters angeschlossen sind, das in der Fig. 2 schematisch dargestellt ist.

Beim Durchschalten des Schalters FET1 ergibt sich aufgrund der kapazitiven Belastung der Lastwicklung 3 ein sehr steiler Stromanstieg, wodurch der Kern 2, der mit einem Luftspalt behaftet ist, rasch magnetisiert wird. Weiters ist die durch die Diode 7 und den Kondensator 9 gebildete Serienschaltung bei durchgeschaltetem Schalter FET1 kurzgeschlossen.

Schaltet nun der Schalter FET2 ab, so hat dies keine weitere Beeinflussung des Wandlers zur Folge, da dieser ebenso wie die Zusatzwicklung 6 bei durchgeschaltetem Schalter FET1 durch diesen kurzgeschlossen ist.

Schaltet in weiterer Folge der Schalter FET1 ab, so führt dies aufgrund der erfolgten Magnetisierung des Kernes 2 zur Ausbildung einer Induktionsspitze, die über die Diode 7 den Kondensator 9 auflädt. Weiters wird die in der Lastwicklung eine Spannung induziert und ein Teil der im Kern gespeicherten magnetischen Energie auf die Lastwicklung 3 und den an dieser angeschlossenen Lastkreis übertragen. Weiters wird auch in der Entmagnetisierwicklung 5 eine Spannung induziert, wodurch es über die Diode 8 zu einem Stromfluß kommt und die Energie dem Kondensator 17 zugeführt wird.

Nach einer Pause, während der die Hauptstrompfade der beiden Schalter FET1 und FET2 gesperrt gehalten werden, kommt es abermals zu einer Durchschaltung dieser beiden Schalter. Dabei wird durch die Regeleinheit 11 sichergestellt, daß sich bei steigender Ausgangsspannung und bzw. oder steigendem Laststrom der Kaskadenschaltung 10, die noch später erläutert werden wird, die Pausen zwischen den Durchschaltungen der Schalter FET1 und FET2 vergrößern, wodurch die dem Eintaktwandler zugeführte Leistung sinkt.

Beim abermaligen Ansteuern der Schalter FET1 und FET2, die durch die Steuereinheit 13 mit gleichphasigen Ansteuersignalen beaufschlagt werden, wobei die Frequenz dieser Signale durch die Regeleinheit 11 vorgegeben wird, schaltet der Schalter FET2 aufgrund seiner geringeren Belastung rascher durch als der FET1. Dadurch wird zuerst der Kondensator 9 über die Zusatzwicklung 6 und den Schalter FET2 entladen, wodurch die im Kondensator 9 gespeicherte Energie in den Kern 2 eingespeist wird.

Schaltet nun auch der Schalter FET1 durch, so kommt es wieder zur Ausbildung einer Stromspitze, die umso höher ist, je höher die Belastung der Lastwicklung ist. Dabei kommt es wieder zu einer raschen Magnetisierung des Kernes 2 wodurch es zu einer Induzierung einer Spannung in der Lastwicklung 3 kommt und sich der weitere Ablauf, wie oben beschrieben gestaltet.

Durch die Rückführung der Energie in den Kern werden Spannungsspitzen an den Schaltern FET1 und FET2 vermieden, obwohl die Lastwicklung mit einer kapazitiven Last, der Kaskade 10 belastet ist.

Diese Kaskadenschaltung 10 ist an die Lastwicklung 3 angeschlossen und weist mit den Anschlüssen derselben verbundene Reihenschaltungen von je drei Kondensatoren C1, C3, C5, bzw. C2, C4, C6 auf. Weiters ist eine Reihenschaltung von sechs Gleichrichtern D1, D2, D3, D4, D5 und D6 vorgesehen. Die Verbindungspunkte der einzelnen Gleichrichter D1, D2, D3, D4, D5 und D6 sind mit den Verbindungspunkten der Kondensatoren C1, C3, C5, bzw. C2, C4, C6 verbunden, wobei je zwei Gleichrichter einen Kondensator überbrücken. Dabei ist jeder einzelne Gleichrichter D1, D2, D3, D4, D5 und D6 mit beiden Reihenschaltungen der Kondensatoren C1, C3, C5, bzw. C2, C4, C6 verbunden.

Der Gleichrichter D1 ist dabei mit dem einen Anschluß der Lastwicklung 3 verbunden, an der auch die eine Ausgangsleitung 14 angeschlossen ist, in der auch ein Widerstand Rᵢ zur Gewinnung eines vom Belastungsstrom der Kaskade 10 abhängigen Signales eingeschaltet ist. Die zweite Ausgangsleitung 15 ist an den Gleichrichter D6 und den Kondensator C6 angeschlossen, wobei an dieser Ausgangsleitung auch ein Widerstand Rᵥ zur Gewinnung eines von der Ausgangsspannung der Kaskade 10 abhängigen Signales angeschlossen ist.

Bei dieser Kaskadenschaltung 10, die auch für die Gleichrichtung der von der Lastwicklung 3 abgenommenen Wechselspannung sorgt, steht an jedem Gleichrichter D1 bis D6 eine dem Effektivwert der Ausgangsspannung der Lastwicklung 3 entsprechende Gleichspannung an, wodurch es zu einer Vervielfachung der Ausgangsspannung der Lastwicklung 3 kommt. Dadurch ist an jeder Stufe, die durch je einen Kondensator und einen Gleichrichter gebildet ist, die Ausgangsspannung der Lastwicklung 3 abgreifbar. Da die einzelnen Stufen in Serie geschaltet sind, ergibt sich durch die zweite und jede weitere Stufe eine Erhöhung der Ausgangsspannung der Kaskadenschaltung 10, die an deren Ausgangsleitungen 14, 15 abgreifbar ist, um die Ausgangsspannung (Effektivwert) der Lastwicklung 3.

Die Regeleinheit 11 weist, wie aus der Fig. 1 zu ersehen ist, eine Vergleicherschaltung 111 auf, die mit den Widerständen Rᵢ und Rᵥ und einer regelbaren Referenzspannungsquelle 16 verbunden ist. Diese Vergleicherschaltung 111 liefert in Abhängigkeit von der Ausgangsspannung der Kaskadenschaltung 10 und deren Belastungsstromes und der eingestellten Referenzspannung ein Ausgangssignal, das den nachgeschalteten spannungsgesteuerten Oszillator 112 steuert. Diesem ist ein frequenzgesteuertes Monoflop 113 nachgeschaltet, das ausgangsseitig mit der Steuereinheit 13 verbunden ist. Dabei ist der spannungsgesteuerte Oszillator 112 über eine Diode D21 und einen Kondensator C31 mit dem frequenzgesteuerten Monoflop 113 verbunden. Der Ausgang VII des frequenzgesteuerten Monoflops 113 ist mit einem Steuereingang der Steuereinheit 13 verbunden.

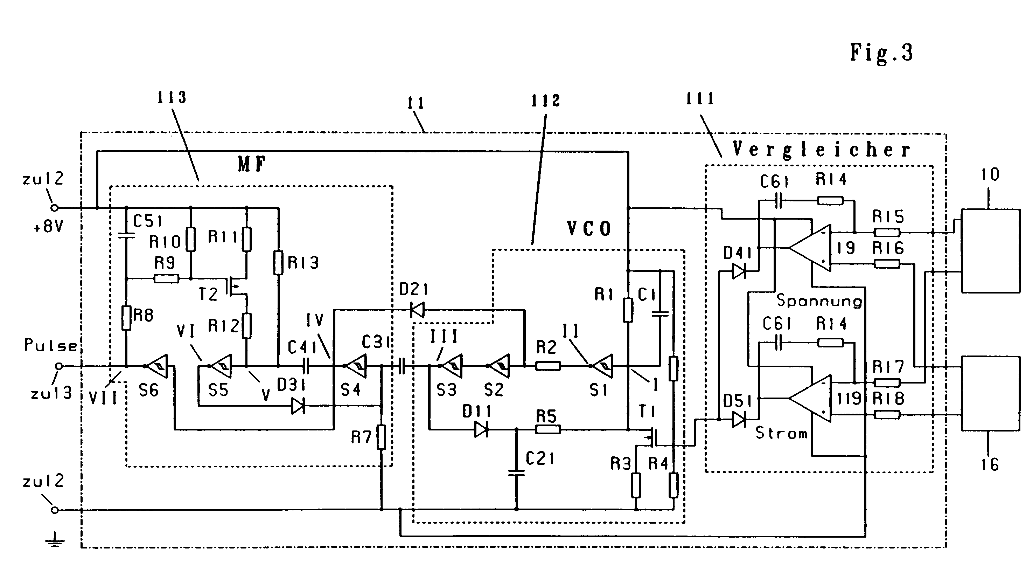

Die Regeleinheit 11 wird noch anhand der Fig. 3 bis 6 näher erläutert.

Bei dem in der Fig. 2 schematisch dargestellten Filter strömt das zu reinigende Abgas durch einen an beiden Seiten offenen Wabenkörper 20, der zweckmäßigerweise aus einer Keramik hergestellt ist. Zu beiden Seiten des Wabenkörpers 20 sind Elektroden 21, 22 angeordnet, die mit den Ausgängen 14, 15 der Kaskade 10 verbunden sind.

Die zu reinigenden Abgase durchströmen die Kanäle 23 des Wabenkörpers 20 und werden dabei dem durch die Elektroden 21, 22, die mit den Ausgangsleitungen 14, 15 der Kaskadenschaltung 10 verbunden und mit Gleich-Hochspannung beaufschlagt sind, aufgebauten elektrischen Feld ausgesetzt, wodurch es zu einer Aufladung der Rußpartikel kommt und sich diese an den Wänden der Kanäle 23 niederschlagen. Gleichzeitig kommt es auch zu einer Aufladung der im Abgas enthaltenen Sauerstoffmoleküle, sodaß es zu Bildung von O₂⁻ Radikalen kommt. Diese ermöglichen eine Verbrennung der abgelagerten Rußpartikel bei relativ niedrigen Temperaturen, sodaß diese bereits bei den üblichen Temperaturen der Abgase von Diesel-Brennkraftmaschinen verbrennen und es zu keiner Verstopfung des Filters kommt.

Die Regeleinheit 11 wird nun anhand der Fig. 3 näher erläutert.

Die Vergleicherschaltung 111 weist zwei Komparatoren 19, 191 auf, deren eine Eingänge über die Widerstände R15, bzw. R17 mit der Kaskade 10, bzw. mit dem Widerstand Rᵥ bzw. Rᵢ verbunden sind. Die Referenzeingänge der Komparatoren 19, 191 sind über die Widerstände R16, bzw. R18 mit der Referenzspannungsquelle 16 verbunden. Diese ist über eine Fernsteuerung (nicht dargestellt) einstellbar.

Die beiden Komparatoren 19, 191 sind mit je einer Rückkopplungsschleife, die durch je einen Kondensator C61 und einen Widerstand R14 gebildet ist, beschaltet und liefern ein der jeweiligen Differenzspannung an ihren Eingängen entsprechendes Ausgangssignal.

Die Ausgänge der beiden Komparatoren 19, 191, die ein der Differenz zwischen der Ausgangsspannung der Kaskade 10, bzw. dem Belastungsstrom derselben und den jeweils eingestellten Sollwerten entsprechende Ausgangssignale liefern, sind über Dioden D41, bzw. D51, die mit ihren einen Elektroden miteinander verbunden sind, mit dem spannungsgesteuerten Oszillator 112 verbunden. Dabei ist der gemeinsame Anschluß der beiden Dioden D41 und D51 über einen Widerstand R4 mit dem festen Potential (Masse) der Spannungsversorgung 12 verbunden und steht über einen Widerstand R6 mit dem Pluspol derselben in Verbindung.

Die Eingangsstufe des spannungsgesteuerten Oszillators 112 ist durch den Transistor T1 gebildet, der praktisch als steuerbarer Widerstand wirkt und der in Reihe zu einem Widerstand R3 geschaltet ist.

Dieser spannungsgesteuerte Oszillator 112 weist einen Schmitt-Trigger S1 auf, der mit einem R/C-Glied R1, C11 beschaltet ist und der über einen Widerstand R21 mit einem weiteren als Inverter wirkenden Schmitt-Trigger S2 verbunden ist. Dieser Inverter ergibt aufgrund seiner Eingangskapazität in Verbindung mit dem Widerstand R21 eine bestimmte Zeitverzögerung für das Signal und ist mit einem weiteren als Inverter wirkenden Schmitt-Trigger S3 verbunden. Der Ausgang dieses Schmitt-Triggers S3 ist über eine Diode D11 und ein aus dem Kondensator C21 und dem Widerstand R5 bestehenden Zeitglied auf den Eingang des Schmitt-Triggers S1 und die Eingangsstufe mit dem Transistor T1 rückgekoppelt. Dabei verhindert dieses Zeitglied C21, R5 die Übertragung zu steiler Schaltflanken des am Ausgang des Schmitt-Trigger S3 anfallenden Signalzuges auf den Eingangskreis.

Das Zeitglied R1, C11 bestimmt die Aufladung und damit den Schaltzeitpunkt des Schmitt-Triggers S1, der eine interne Diode aufweist, deren Leckströme durch den Widerstand R1 kompensiert werden.

Je nach der Größe des Widerstandes des Transistors T1 im Eingangskreis, der von dessen Ansteuerung abhängt, schwingt der spannungsgesteuerte Oszillator 112 mit mehr oder weniger hoher Frequenz.

Dieser Oszillator 112 ist über eine Impulsformerstufe, die durch den Kondensator C31 und den Widerstand R7 gebildet ist, mit dem steuerbaren Monoflop 113 verbunden. Dabei bewirkt die Impulsformerstufe C31, R7 die Umformung der vom Oszillator 112 kommenden Rechteckimpulse in Nadelimpulse.

Der Monoflop 113 weist einen Schmitt-Trigger S4 auf, dessen Eingang mit dem Kondensator C31 bzw. dem Widerstand R7 verbunden ist und dessen Ausgang mit einem Kondensator C41 verbunden ist, der Teil des die Ablaufzeit des Monoflops 113 steuernden Zeitgliedes ist. Dieses Zeitglied weist neben dem Kondensator C41 noch eine Widerstandskombination auf, die durch den Widerstand R13 und den zu diesem parallel geschalteten Widerständen R11, R12, die über einen Transistor T2 miteinander verbunden sind, gebildet ist, wobei der Transistor T2 als variabler Widerstand wirkt. Je nach der Ansteuerung des Transistors T2 ändert sich daher die Ablaufzeit des Monoflops 113.

Der Ausgang des dem Kondensators C41 nachgeschalteten Schmitt-Triggers S5 ist über eine Diode D31 mit dem Eingang des Schmitt-Triggers S4 verbunden.

Zur Steuerung des die Ablaufzeit des Monoflops 113 bestimmenden Zeitgliedes ist ein als Inverter wirkender Schmitt-Trigger 56 mit dem Ausgang des Schmitt-Triggers S4 verbunden, wobei der Ausgang VII des Schmitt-Triggers S6 mit der Steuereinheit 13 verbunden ist, die die Schalter FET1 und FET2 steuert. Weiters ist der Ausgang des Schmitt-Triggers S6 mit einem Tiefpaß verbunden, der durch den Widerstand R8 und den Kondensator C51 gebildet ist. Dabei ist die Steuerelektrode des Transistors T2 über einen durch die Widerstände R9 und R10 gebildeten Spannungsteiler mit dem Tiefpaß R8, C51 verbunden.

Der Eingang des Schmitt-Triggers S2 des spannungsgesteuerten Oszillators 112 ist mit einer Sperrdiode D21 mit dem die Ablaufzeit des Monoflops 113 bestimmenden Zeitgliedes C41, R13, R11, R12, T2 verbunden. Diese Sperrdiode D21 stellt sicher, daß das Monoflop 113 erst dann wieder getriggert werden kann, wenn dieses sicher in den Ruhezustand zurückgekippt ist. Dadurch wird vermieden, daß das Monoflop 113 durch eine Triggerung während des Zurückkippens, ohne den Ruhezustand erreicht zu haben, wieder getriggert werden kann.

Wird bei einer vorgegebenen Ausgangsspannung an den Ausgängen 14, 15 der Kaskade 10 eine stärkere Belastung und damit ein höherer Stromfluß erfaßt, so ändert sich das Ausgangssignal des Komparators 191 und führt zu einer Verminderung des Widerstandes des Transistors T1. Dies führt zu einer entsprechenden Erhöhung der Frequenz des spannungsgesteuerten Oszillators 112 und damit über die von der Frequenz des Oszillators 112 abhängigen Steuerung des Zeitgliedes C41, R13, R12, R11, T2 zu einer Änderung des Tastverhältnisses der die Steuereinheit 13 ansteuernden Signalzüge des Schmitt-Triggers S6. Dies ist durch die Änderung der Ablaufzeit des Monoflops 113 bedingt.

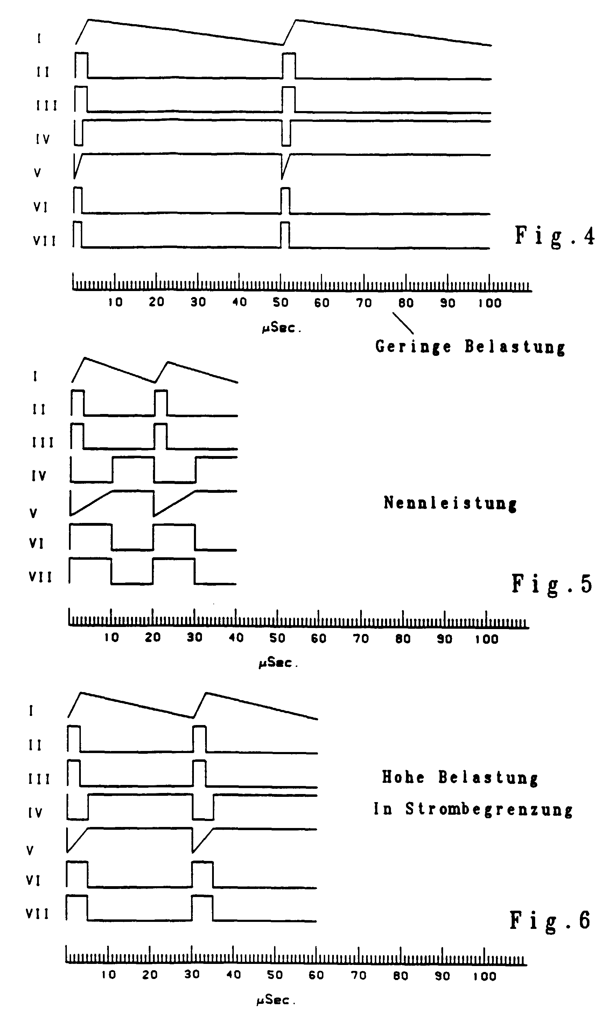

In den Fig. 4 bis 6 sind die Signalzüge an verschiedenen mit römischen Zahlen bezeichneten Punkten der Regeleinheit 11 bei geringer Belastung (Fig. 4), bei der Nennbelastung (Fig. 5) und bei hoher Belastung, bei der es bereits zu einer Begrenzung des Laststromes kommt (Fig. 6), dargestellt.

Ein Vergleich der Fig. 4 bis 6 zeigt, daß sich mit der Belastung die Frequenz des Oszillators 112 erhöht, jedoch bei Überschreiten einer bestimmten Belastung, bei der es zu einer Begrenzung des Belastungsstromes kommt, wieder absinkt und sich das Tastverhältnis der Signale am Ausgang des Schmitt-Triggers S6, bzw. am Punkt VII mit der Belastung vergrößert.

Es kann auch vorgesehen sein, daß die Spannungsversorgung 12 ein Unterspannungs-Abschaltkreis und eine Sanftanlaufschaltung umfaßt, deren Ausgang über eine gesonderte Leitung und einen weiteren Widerstand mit dem gemeinsamen Anschluß der beiden Dioden D51 und D41 verbunden ist.

## Patentansprüche

1. Fremdgesteuerte Wandlerschaltung zur Umwandlung einer Gleichspannung in eine Wechselspannung mit einem magnetisierbaren Kern (2), der von Wicklungen umgeben ist, und zwar einer mit einem Pol einer Gleichspannungsquelle (18) verbundenen Arbeitswicklung (4), deren zweites Ende über einen gesteuerten Schalter (FET1) mit dem zweiten Pol der Gleichspannungsquelle (18) verbunden ist, einer Entmagnetisierwicklung (5), deren einer Anschluß mit einem Pol der Gleichspannungsquelle und deren anderer Anschluß über eine Diode (8) mit dem zweiten Pol der Gleichspannungsquelle verbunden ist, einer mit einer Last verbundenen Lastwicklung (3), wobei eine eine Diode (7) und einen Kondensator (9) aufweisende Serienschaltung parallel zum Hauptstrompfad des die Arbeitswicklung (4) steuernden Schalters (FET1) geschaltet ist und der Kondensator (9) mit dem zweiten Pol (Masse) der Spannungsquelle (18) verbunden ist und ein zweiter steuerbarer Schalter (FET2) vorgesehen ist, der in Phase mit dem die Arbeitswicklung (4) steuernden Schalter (FET1) angesteuert wird, **dadurch gekennzeichnet**, daß eine Zusatzwicklung (6) vorgesehen ist, die über den in Phase mit dem gesteuerten Schalter (FET1) der Arbeitswicklung (4) ansteuerbaren weiteren gesteuerten Schalter (FET2) schaltbar ist, wobei die Zusatzwicklung (6) mit einen Anschluß an dem Verbindungspunkt der Diode (7) und des Kondensators (9) angeschlossen ist und der zweite Anschluß der Zusatzwicklung (6) über den zweiten steuerbaren Schalter (FET2) ebenfalls mit dem zweiten Pol (Masse) der Spannungsquelle (18) verbindbar ist.

2. Wandler nach Anspruch 1, **dadurch gekennzeichnet,** daß der Kern (2) des Wandlers (1) einen Luftspalt aufweist.

3. Wandler zum Umwandeln von Gleichspannung in eine Gleichspannung mit unterschiedlichem Spannungswert mit einem Wandler nach Anspruch 1, an dem eine Gleichrichterschaltung mit mehreren Gleichrichtern angeschlossen ist, **dadurch gekennzeichnet**, daß die Gleichrichterschaltung durch eine Kaskadenschaltung (10) gebildet ist, bei der jeder der beiden Anschlüsse der Lastwicklung (3) mit einer Reihenschaltung von Kondensatoren (C1, C2, C3, C4, C5, C6) verbunden ist und eine Reihenschaltung von Gleichrichtern (D1, D2, D3, D4, D5, D6) vorgesehen ist, deren Verbindungspunkte mit den Verbindungspunkten der Kondensatoren verbunden sind, wobei je zwei Gleichrichter einen Kondensator überbrücken.

4. Wandler nach Anspruch 3, **dadurch gekennzeichnet**, daß an dessen Ausgang den Strom und bzw. oder die Spannung erfassende Fühler (Rᵢ, Rᵥ) angeordnet sind, die mit Eingängen von Komparatoren (19, 191) in Verbindung stehen, deren zweite Eingänge mit Sollwertgebern (16) verbunden sind, und die ausgangsseitig mit einem spannungsgesteuerten Oszillator (112) verbunden sind, der einen Eingangskreis aufweist, der einen mit den Ausgängen der Komparatoren (19, 191) in Verbindung stehenden variablen Widerstand (T1) aufweist, wobei aer spannungsgesteuerte Oszillator (112) ausgangsseitig mit einem frequenzgesteuerten Monoflop (113) in Reihe geschaltet ist, dessen Ausgang mit einer den Schaltern (FET1, FET2) zugeordneten Steuereinheit (13) verbunden ist und dessen zeitbestimmendes Glied (C41 R13, R1, R2, T1) in Abhängigkeit von der Frequenz des spannungsgesteuerten Oszillators (112) gesteuert ist.

5. Wandler nach Anspruch 4, **dadurch gekennzeichnet**, daß das zeitbestimmende Glied (C41, R13, R11, R12, T2) des frequenzgesteuerten Monoflops (113) einen steuerbaren Widerstand (T2) aufweist, der von einem Tiefpaß (R8, C51) gesteuert ist.

6. Wandler nach Anspruch 4 oder 5, **dadurch gekennzeichnet**, daß zwischen dem spannungsgesteuerten Oszillator (112) und dem frequenzgesteuerten Monoflop (113) eine Impulsformerschaltung (C31, R7) zur Erzeugung von Nadelimpulsen zwischengeschaltet ist.

7. Wandler nach einem der Ansprüche 4 bis 6, **dadurch gekennzeichnet**, daß eine Sperrschaltung vorgesehen ist, die während der Ablaufzeit des frequenzgesteuerten Monoflops (113) zu diesem gelangende Impulse verhindert.

8. Wandler nach einem der Ansprüche 4 bis 7, **dadurch gekennzeichnet**, daß der spannungsgesteuerte Oszillator (112) mit Schmitt-Triggern aufgebaut ist und die Sperrschaltung durch eine Sperrdiode (D21) gebildet ist, die mit dem Ausgang eines mit einem Zeitglied (R1, C11) beschalteten Schmitt-Triggers (S1) des spannungsgesteuerten Oszillators (112) in Verbindung steht und an dem Zeitglied (C41, R12, R11, R12, T2) des frequenzgesteuerten Monoflops (112) angeschlossen ist.

9. Verwendung eines Wandlers nach einem der Ansprüche 3 bis 8 zur Versorgung eines Rußfilters für Abgase, insbesondere für Abgase von Diesel-Brennkraftmaschinen, welches Filter zwei im wesentlichen parallel zum Abgasstrom ausgerichtete, an die Ausleitungen der Kaskadenschaltung angeschlossene Elektroden, zur Erzeugung eines elektrischen Feldes und zwischen diesen angeordnete Abscheideflächen für den Ruß aufweist, die an elektrisch isolierenden Teilen angeordnet sind.

## Claims

1. An externally controlled transformer circuit to transform a direct voltage into an alternating voltage with a magnetizable core (2) which is encompassed by windings, namely an operating winding (4) which is connected with a pole of a direct voltage source (18) and whose second end is connected with a second pole of the direct voltage source (18) by way of a controlled switch (FET1), a degaussing winding (5) whose one connection is connected with one pole of the direct voltage source and whose other connection is connected via a diode (8) with the second pole of the direct voltage source, a load winding (3) which is connected with a load, with a series circuit having a diode (7) and a capacitor (9) being connected parallel to the main current path of the switch (FET1) controlling the operating winding (4) and the capacitor (9) being connected with the second pole (ground) of the voltage source (18) and a second controllable switch (FET2) being provided which is triggered in phase with the switch (FET1) controlling the operating winding (4), characterized in that an additional winding (6) is provided which can be switched via the further controlled switch (FET2) which can be controlled in phase with the controlled switch (FET1) of the operating winding (4), with the additional winding (6) being connected with one connection to the connecting point of the diode (7) and the capacitor (9) and the second connection of the additional winding (6) also being connectable with the second pole (ground) of the voltage source (18) via the second controllable switch (FET2).

2. A transformer as claimed in claim 1, characterized in that the core (2) of the transformer (1) comprises an air gap.

3. A transformer to transform direct voltage into a direct voltage with different voltage value with a transformer as claimed in claim 1 to which a rectifier circuit with several rectifiers is connected, characterized in that the rectifier circuit is formed by a cascaded circuit (10) where each of the two connections of the load winding (4) is connected with a series connection of capacitors (C1, C2, C3, C4, C5, C6) and a series connection of rectifiers (D1, D2, D3, D4, D5, D6) is provided whose connecting points are connected with the connecting points of the capacitors, with two rectifiers each bridging one capacitor.

4. A transformer as claimed in claim 3, characterized in that sensors (Rᵢ, Rᵥ) are arranged on its output which detect the current and/or the voltage and are connected with the inputs of comparators (19, 191) whose second inputs are connected with setpoint generators (16) and which on the output side are connected with a voltage-controlled oscillator (112) which is provided with an input circuit having a variable resistor (T1) which is in connection with the outputs of the comparators (19, 191), with the voltage-controlled oscillator (112) being switched in series on the output side with a controllable monoflop (113) whose output is connected with a control unit (13) which is allocated to the switches (FET1, FET2) and whose time-determining element (C41, R13, R1, R2, T1) is controlled depending on the frequency of the voltage-controlled oscillator (112).

5. A transformer as claimed in claim 4, characterized in that the time-determining element (C41, R13, R1, R2, T1) of the frequency-controlled monoflop (113) is provided with a controllable resistor (T2) which is controlled by a lowpass (R8, C51).

6. A transformer as claimed in claim 4 or 5, characterized in that a pulse shaper circuit (C31, R7) forming needle pulses is interposed between the voltage-controlled oscillator (112) and the monoflop (113).

7. A transformer as claimed in claim 4 to 6, characterized in that a blocking circuit is provided which during the operating time of the frequency-controlled monoflop (113) blocks pulses that reach the same.

8. A transformer as claimed in one of the claims 4 to 7, characterized in that the voltage-controlled oscillator (112) is based on Schmitt triggers and the blocking circuit is formed by a blocking diode (D21) which is in connection with the output of a Schmitt trigger (S1), which is wired with a timing element (R1, C11), of the voltage-controlled oscillator (112) and is connected to the timing element (C41, R13, R11, R12, T2) of the monoflop (113).

9. The application of the transformer as claimed in one of the claims 3 to 8 for supplying a soot filter for exhaust gases, in particular for exhaust gases of diesel combustion engines, which filter is provided with two electrodes which are aligned substantially parallel to the exhaust gas flow and are connected to the terminal leads of the cascade circuit to produce an electrical field and which filter is provided with depositing surfaces which are arranged between the same and are arranged on electrically insulating elements.

## Revendications

1. Circuit convertisseur à commande externe pour convertir une tension continue en une tension alternative, comportant un noyau magnétique aimantable (2), qui est entouré par des enroulements, à savoir un enroulement de travail (4) relié à un pôle d'une source de tension continue (18) et dont la seconde extrémité est reliée par l'intermédiaire d'un interrupteur commandé (FET1) au second pôle de la source de tension continue (18), un enroulement de désaimantation (5), dont une borne est reliée à un pôle de la source de tension continue et dont l'autre borne est reliée par l'intermédiaire d'une diode (8) au second pôle de la source de tension continue, et un enroulement de charge (3) relié à une charge, et dans lequel un circuit série comprenant une diode (7) et un condensateur (9) est branché en parallèle avec la voie de courant principale de l'interrupteur (FET) qui commande l'enroulement de travail (4), et le condensateur (9) est relié au second pôle (masse) de la source de tension (18), et il est prévu un second condensateur commandable (FET2), qui est commandé en phase avec l'interrupteur (FET1) qui commande l'enroulement de travail (4), caractérisé en ce qu'il est prévu un enroulement supplémentaire (6), qui peut être commuté par l'intermédiaire de l'autre interrupteur (FET2) qui peut être commandé en phase à l'aide de l'interrupteur commandé (FET1) de l'enroulement de travail (4), l'enroulement supplémentaire (6) étant raccordé par une borne au point de liaison de la diode (7) et du condensateur (9), tandis que la seconde borne de l'enroulement supplémentaire (6) peut être reliée par l'intermédiaire du second interrupteur commandable (FET2) également au second pôle (masse) de la source de tension (18).

2. Convertisseur selon la revendication 1, caractérisé en ce que le noyau (2) du convertisseur (1) possède un entrefer.

3. Convertisseur pour convertir une tension continue en une tension continue possédant une valeur différente à l'aide d'un convertisseur selon la revendication 1, auquel est raccordé un circuit redresseur comprenant plusieurs redresseurs, caractérisé en ce que le circuit redresseur est formé par un circuit en cascade (10), dans lequel chacune des deux bornes de l'enroulement de charge (3) est reliée à un circuit série formé de condensateurs (C1,C2,C3,C4,C5,C6), et il est prévu un circuit série de redresseurs (D1,D2,D3,D4,D5,D6), dont les points de liaison sont reliés aux points de liaison des condensateurs, deux redresseurs shuntant respectivement un condensateur.

4. Convertisseur selon la revendication 3, caractérisé en ce qu'à sa sortie sont raccordés des capteurs (Rᵢ, Rᵥ) détectant le courant et/ou la tension et qui sont reliés à des entrées de comparateurs (19,191), dont les deuxièmes entrées sont reliées à des générateurs de valeurs de consigne (16) et qui sont reliés, côté sortie, à un oscillateur (112) commandé en tension, qui possède un circuit d'entrée, qui comporte une résistance variable (T1), qui est reliée aux sorties des comparateurs (19,191), l'oscillateur (112) commandé en tension étant branché en série, côté sortie, avec un multivibrateur monostable (113) commandé en fréquence, dont la sortie est reliée à une unité de commande (13) associée aux interrupteurs (FET1,FET2) et dont le circuit de temporisation (C41,R13,R1,R2,T1) est commandé en fonction de la fréquence de l'oscillateur (112) commandé en tension.

5. Convertisseur selon la revendication 4, caractérisé en ce que le circuit de temporisation (C41,R13,R11,R12,T2) du multivibrateur monostable (113) commandé en fréquence possède une résistance commandable (T2), qui est commandée par un filtre passe-bas (R8,C51).

6. Convertisseur selon la revendication 4 ou 5, caractérisé en ce qu'entre l'oscillateur (112) commandé en tension et le multivibrateur monostable (113) commandé en fréquence est intercalé un circuit de mise en forme d'impulsions (C31,R7) servant à produire des impulsions en forme de pointes.

7. Convertisseur selon l'une des revendications 4 à 6, caractérisé en ce qu'il est prévu un circuit de blocage qui, pendant la durée de retombée du multivibrateur monostable (113) commandé en fréquence bloque les impulsions envoyées à ce multivibrateur monostable.

8. Convertisseur selon l'une des revendications 4 à 7, caractérisé en ce que l'oscillateur (112) commandé en tension est constitué par des déclencheurs de Schmitt et le circuit de blocage est formé par une diode de blocage (D21), qui est reliée à la sortie d'un déclencheur de Schmitt (S1), connecté à un circuit de temporisation (R1,C11), de l'oscillateur (112) commandé en tension, et est raccordée au circuit de temporisation (C41,R13,R11,R12,T2) du multivibrateur monostable (113) commandé en fréquence.

9. Utilisation d'un convertisseur selon l'une des revendications 3 à 8 pour alimenter un filtre à suie pour des gaz d'échappement, notamment pour des gaz d'échappement de moteurs diesel, lequel filtre comporte deux électrodes, qui sont orientées sensiblement parallèlement au courant des gaz d'échappement et sont raccordées aux conducteurs de sortie du circuit en cascade, pour la production d'un champ électrique, et comporte des surfaces de dépôt pour la suie, situées entre ces électrodes et qui sont disposées sur des parties électriquement isolantes.
